# EUROPÄISCHE PATENTSCHRIFT

(11) **EP 1 159 997 B1**
(45) Veröffentlichungstag und Bekanntmachung des Hinweises auf die Patenterteilung: **03.12.2003**
(21) Anmeldenummer: 01111355.2
(22) Anmeldetag: 09.05.2001
(51) Int. Cl.: B01D 25/12

(54) **Membranfilterplatte für eine Filterpresse sowie Trägerplatte und Membran für eine solche Membranfilterplatte**
Membrane filter plate for a filter press and also a supporting plate and membrane for this membrane filter plate
Plaque filtrante à membrane pour filtre-presse ainsi que la plaque de support et la membrane pour ladite plaque filtrante à membrane

(30) Priorität: 19.05.2000 DE 10024722
(43) Veröffentlichungstag der Anmeldung: 05.12.2001
(73) Patentinhaber: Klinkau GmbH + Co., 87616 Marktoberdorf (Leuterschach) (DE)
(72) Erfinder: Stanik, Reimund, 87616 Marktoberdorf (DE); Seib, Kurt, 87616 Marktoberdorf (DE)
(74) Vertreter: Goddar, Heinz J., Dr.

(56) Entgegenhaltungen:
- DE-A- 2 933 034
- DE-A- 4 119 166
- US-A- 4 404 102

## Beschreibung

Die vorliegende Erfindung betrifft eine Membranfilterplatte für eine Filterpresse gemäß dem Oberbegriff des Anspruchs 1. Die Erfindung betrifft ferner eine Trägerplatte sowie eine Membran für einen Einsatz in einer solchen Membranfilterplatte.

Membranfilterplatten für einen Einsatz in Filterpressen sind grundsätzlich bekannt. In der Regel werden mehrere Membranfilterplatten in einer Filterpresse zusammengespannt, so daß zwischen den einzelnen Membranfilterplatten eine Filterkammer entsteht. Über einen Einlaufund/oder Auslaufbereich wird eine Suspension in die Filterkammer gedrückt. Die Suspension wird durch ein auf der Membran aufliegendes Filtertuch gefiltert, wobei die Feststoffe durch das Filtertuch in der Filterkammer zurückgehalten werden. Das von den Festkörpern befreite Filtrat wird danach aus dem System herausgeleitet. Die Membranen können mit einem Druckmittel beaufschlagt werden, so daß sie sich von einem Randbereich der Filterkammer in die Filterkammer und aufeinander zu erstrecken, so daß die während des Filtervorgangs herausgefilterten Festkörper zusammengepreßt und dabei sowohl verdichtet werden, so daß ein Filterkuchen entsteht.

Da die Membranen im Vergleich zu den Filterplatten in der Regel einem höheren Verschleiß unterworfen sind, sind Membranfilterplatten mit auswechselbaren Membranen eingeführt worden.

Solche auswechselbaren Membranen müssen sowohl im Randbereich an der Filterplatte befestigt werden als auch um einen Einlauf- und/oder Auslaufbereich herum. Solch ein Einlaufund/oder Auslaufbereich kann an verschiedenen Stellen innerhalb der Fläche der Membranfilterplatte angeordnet sein. Häufig sind zentral angeordnete Einlauf- und/oder Auslaufbereiche vorgesehen.

Eine übliche Membranfilterplatte hat beispielsweise einen zentralen Einlaufbereich und Auslauföffnungen im Randbereich der Membranfilterplatte.

Eine sichere und dichte Befestigung der Membran an der Trägerplatte um den Einlaufund/oder Auslaufbereich herum ist notwendig, um einen reibungslosen Filterbetrieb zu gewährleisten.

Üblicherweise wird zur Befestigung der Membran an der Trägerplatte um einen Einlaufund/oder Auslaufbereich herum ein zweiteiliger Befestigungsring verwendet, wobei jedes Element Anpreßschultern aufweist. Die Elemente werden von je einer Seite in die Öffnung des Einlauf- und/oder Auslaufbereichs eingesetzt und miteinander verschraubt, so daß die Anpreßschultem eine sichere Befestigung der Membran an der Trägerplatte sicherstellen. Dieses System ist relativ zuverlässig, hat aber einige gravierende Nachteile. Wird ein Kunststoffring verwendet, ist insbesondere bei höheren Arbeitstemperaturen die Stabilität und damit die Dichtigkeit des Befestigungsrings nicht mehr gegeben. Je nach Anwendungsbereich können Arbeitstemperaturen von bis zu 100 °C auftreten.

In diesen Fällen werden in der Regel Befestigungsringe aus Stahl eingesetzt. Diese Stahlringe sind jedoch sehr kostenintensiv. Insbesondere bei chemischen Anwendungen sind die Ringe darüber hinaus einer starken Korrosion ausgesetzt und sie werden beispielsweise durch säurehaltige Flüssigkeiten angegriffen.

Darüberhinaus ist das Anbringen dieser Befestigungsringe zeitaufwendig.

Aus der EP 0 383 115 B1 wird eine Vorrichtung offenbart, bei der Gummi-Membranen mit einer Stahlverschraubung in einem Einlaufbereich gehalten werden. Für die Verschraubungen gelten dieselben Argumente und Nachteile wie sie im Zusammenhang mit den Ringen oben erläutert worden sind.

Aus der EP 0 684 061 B1 ist ferner eine Membranfilterplatte bekannt, bei der die Membranen mittels eines Klemmrings, der an einem Haltesteg der Trägerplatte angeordnet ist, um den Einlaufbereich an der Trägerplatte befestigt sind. Dieses Verfahren gleicht in etwa dem oben geschilderten Verfahren, bei dem ebenfalls Ringe eingesetzt werden.

Es ist demnach eine Aufgabe der vorliegenden Erfindung, eine Membranfilterplatte für eine Filterpresse sowie eine Trägerplatte und eine Membran zum Einsatz mit einer solchen Membranfilterplatte zur Verfügung zu stellen, bei der eine sichere und dichte Befestigung der Membran an der Trägerplatte um einen Einlauf- und/oder Auslaüfbereich herum sichergestellt ist. Diese Aufgabe wird durch eine Membranfilterplatte für eine Filterpresse gemäß Anspruch 1 sowie eine Trägerplatte nach Anspruch 21 und eine Membran nach Anspruch 22 gelöst. Die Ansprüche 2 bis 20 betreffen besonders vorteilhaft Ausgestaltungen der erfindungsgemäßen Membranfilterplatte.

Erfindungsgemäß weisen sowohl die Membran als auch die Trägerplatte Befestigungselemente auf, die fest mit der Membran bzw. der Trägerplatte verbunden sind. Die Befestigungselemente sind dabei so angeordnet und ausgebildet, daß Befestigungselemente der Membran in einer Ansetzposition der Membran nicht mit den Befestigungselementen der Trägerplatte wechselwirken. Erst wenn die Membran aus der Ansetzposition in eine Verriegelungsposition, die der Betriebsposition entspricht, geschaltet wird, greifen die Befestigungselemente der Membran in die Befestigungselemente der Trägerplatte ein, so daß die Membran im Einlaufund/oder Auslaufbereich fest mit der Trägerplatte verbunden ist.

Dies hat den Vorteil, daß keinerlei zusätzliche Befestigungselemente oder Vorrichtungen eingesetzt werden müssen, ferner daß der Befestigungsvorgang extrem schnell und unproblematisch verläuft. Darüber hinaus ist die erfindungsgemäße Membranfilterplatte sehr kostengünstig in der Herstellung, insbesondere da, wie oben erwähnt, keine zusätzlichen Befestigungselemente notwendig sind.

Bei den Befestigungselementen handelt es sich bevorzugt um mit Abstand voneinander angeordnete Verriegelungs-Vorsprünge, die sich nur in der Verriegelungsposition zumindest teilweise hinterschneiden, so daß eine sichere Befestigung gewährleistet ist.

Bei einer besonders bevorzugten Ausführungsform ist die Membran mittels einer Drehbewegung um einen festgelegten Winkel zwischen der Ansetzposition und der Verriegelungsposition hin- und herschaltbar. Diese Anordnung ist insbesondere bei den in der Regel kreisförmigen Einlauf- und/oder Auslaufbereichen vorteilhaft. Der Einlauf- und/oder Auslaufbereich der Membran wird dabei über den entsprechenden Einlauf- und/oder Auslaufbereich der Trägerplatte in einer leicht winkelversetzten Ansetzposition auf die Trägerplatte aufgesetzt und nachfolgend durch eine Drehbewegung in die Verriegelungsposition gedreht. Die Befestigungselemente der Membran und der Trägerplatte sind dabei vorteilhafterweise im wesentlichen auf wenigstens einer Kreisbahn angeordnet.

Selbstverständlich ist es auch möglich, daß die Membran mittels einer linearen bzw. geradlinigen Bewegung zwischen der Ansetzposition und der Verriegelungsposition hin- und herschaltbar ist. Bei solch einer Ausführungsform ist es bevorzugt, daß mindestens zwei lineare Anordnungen von Befestigungselementen auf der Membran und der Trägerplatte vorgesehen sind.

Bei allen Anordnungen ist es wichtig, sicherzustellen, daß die Befestigungselemente so eng benachbart angeordnet sind, daß eine zuverlässige Befestigung und Dichtung über den gesamten Einlauf- und/oder Auslaubereich sichergestellt ist.

Eine besonders bevorzugte Ausführungsform der Erfindung weist sowohl auf der Membran als auch auf der Trägerplatte in jeweils zwei konzentrischen Kreisanordnungen vorgesehene Verriegelungs-Vorsprünge auf, so daß eine Art Bajonett-Verschluß bereitgestellt wird.

Die Vorsprünge auf den konzentrischen Kreisen können sich sowohl jeweils gegenüberstehen, es besteht jedoch auch die Möglichkeit, daß ein Vorsprung auf einer Kreisanordnung jeweils einer Lücke zwischen zwei Vorsprüngen auf der anderen Kreisanordnung gegenübersteht. Mit der zweiten Anordnung wird eine gleichmäßigere Befestigungs- und Dichtungsfunktion erzielt.

Bevorzugt sind sowohl die Membran und ihre zugehörigen Befestigungselemente als auch die Trägerplatten und ihre zugehörigen Befestigungselemente aus demselben Material und einstückig hergestellt. Dies vereinfacht insbesondere das Herstellungsverfahren der einzelnen Elemente, stellt aber gleichzeitig sicher, daß auch die Befestigungselemente bezüglich ihrer Materialwahl wie auch die Membran und die Trägerplatte an die zu verarbeiteten Flüssigkeiten bzw. Suspensionen angepaßt sind.

Ein bevorzugtes Material für die Membranen, die Trägerplatten und die Befestigungselemente ist Kunststoff, insbesondere Polypropylen. Es ist jedoch selbstverständlich auch möglich, andere Materialien einzusetzen. Insbesondere sind gelegentlich Gummimembranen gewünscht. In diesem Fall bietet es sich an, den Bereich der Membran, an dem die Befestigungselemente angeordnet sind, und die Befestigungselemente selbst aus einem steiferen Material, insbesondere dem oben genannten Polypropylen herzustellen. Auch eine solche Gummimembran mit Randbereichen bzw. Befestigungselementen aus Polypropylen ist bevorzugt einstückig hergestellt.

Es soll angemerkt werden, daß die geometrische Ausgestaltung der Befestigungselemente sehr vielschichtig sein kann, insbesondere können die Befestigungselemente beispielsweise mit Anlaufschrägen versehen sein, so daß beim Verschieben bzw. beim Drehen der Membran von der Ansetzposition in die Verriegelungsposition die Befestigungselemente derart ineinandergreifen, daß die Membran und die Trägerplatte relativ aufeinander zugezogen werden, so daß eine besonders dichte Verbindung hergestellt wird, gleichzeitig ein einfaches Ansetzen bzw. Einfädeln der Befestigungselemente sichergestellt ist. Dem Fachmann liegen vielfältige Ausgestaltungsmöglichkeiten für die Befestigungselemente offen, ohne vom Gegenstand der vorliegenden Erfindung abzuweichen.

Diese und weitere Vorteile und Merkmale der Erfindung werden anhand der anhängenden schematischen Abbildungen der bevorzugten Ausführungsformen deutlich. Es zeigen:
- Figur 1: einen Ausschnitt aus einer ersten Ausführungsform einer erfindungsgemäßen Membranfilterplatte in zwei Querschnittsdarstellungen;
- Figur 2: einen Ausschnitt aus einer zweiten Ausführungsform einer erfindungsgemäßen Membranfilterplatte in zwei Querschnittsdarstellungen;
- Figur 3: schematisch eine Draufsicht auf eine Anordnung von Befestigungselementen auf einer erfindungsgemäßen Trägerplatte;
- Figur 4: schematisch einen Querschnitt durch zwei miteinander wechselwirkende Befestigungselemente;
- Figur 5a, 5b, 5c: schematisch Ausschnitte weiterer Ausführungsformen der erfindungsgemäßen Membranfilterplatte mit unterschiedlichen Dichtungs-Elementen.

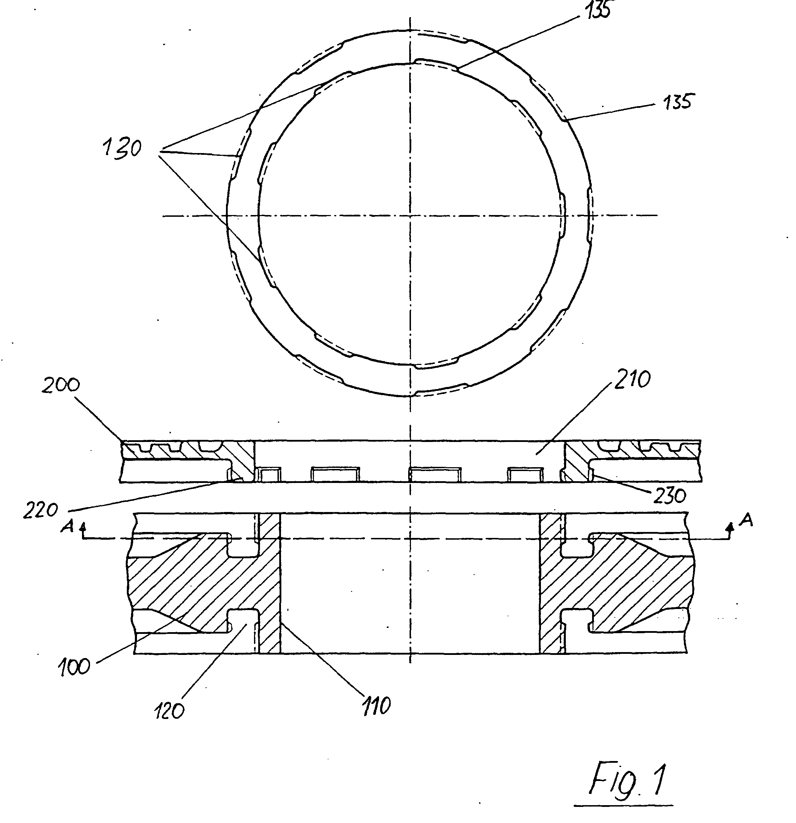

Figur 1 zeigt einen Ausschnitt aus einer ersten Ausführungsform einer erfindungsgemäßen Membranfilterplatte mit einer Trägerplatte 100 und einer Membran 200. Die Trägerplatte 100 weist einen als kreisförmige Öffnung ausgebildeten Einlaufbereich 110 auf, die Membran 200 weist ebenfalls einen als kreisförmige Öffnung ausgebildeten Einlaufbereich 210 auf.

In die Trägerplatte 100 ist in den Umfang des Einlaufbereichs 110 eine Führungs-Nut 120 eingebracht, in die ein Führungs-Vorsprung 220 der Membran 200 einsetzbar ist.

Sowohl die Führungs-Nut 120 der Trägerplatte 100 als auch der Führungs-Vorsprung 220 der Membran 200 weisen in den Seitenbereichen Verriegelungs-Vorsprünge 130, 230 auf. Die Verriegelungs-Vorsprünge 130, 230 sind unterbrochen, wobei die Länge der Unterbrechungen in Umfangsrichtung zwischen den Verriegelungs-Vorsprüngen 130, 230 geringfügig größer ist als die Länge der Verriegelungs-Vorsprünge 130, 230 in Umfangsrichtung, so daß der Führungs-Vorsprung 220 der Membran 200 in einer Ansetzposition der Membran leicht in die Führungs-Nut 120 der Trägerplatte 100 eingesetzt werden kann.

Wie dem oberen Teil der Figur 1 zu entnehmen ist, der schematisch einen Querschnitt durch die Trägerplatte 100 längs der Linie A-A darstellt, sind auf beiden Seiten der Führungs-Nut 120 Verriegelungs-Vorsprünge 130 vorgesehen, wobei sich die Verriegelungs-Vorsprünge 130 jeweils gegenüberliegen. Die Verriegelungs-Vorsprünge 230 der Membran 200 sind analog ausgebildet, so daß in der Ansetzposition der Membran die Verriegelungs-Vorsprünge 230 zwischen den Verriegelungs-Vorsprüngen 130 der Trägerplatte 100 eingerührt werden können. Danach wird die Membran 200 in die Verriegelungsposition gedreht, wobei die Verriegelungs-Vorsprünge 230 die Verriegelungs-Vorsprünge 130 der Trägerplatte hinterschneiden, so daß die Membran 200 nicht mehr von der Trägerplatte 100 abgehoben werden kann.

Bei dieser Ausführungsform weisen alle Verriegelungs-Vorsprünge 130 sowie alle Verriegelimgs-Vorsptünge 230 an ihrem jeweils in Uhrzeigerrichtung vorne liegenden Ende einen Anschlag auf. Diese Anschläge 135, 235 verhindern ein Weiterdrehen der Membran 200 auf der Trägerplatte 100 über ihre Verriegelungs-Stellung hinaus. Diese Anschläge 135 sind lediglich optional, es kann auch auf einige oder auf alle Anschläge verzichtet werden.

Sowohl die Trägerplatte 100 als auch die Membran besteht einschließlich ihrer Verriegelungs-Vorsprünge 130, 230 und der Anschläge 135, 235 vollständig aus Polypropylen und ist einstückig hergestellt.

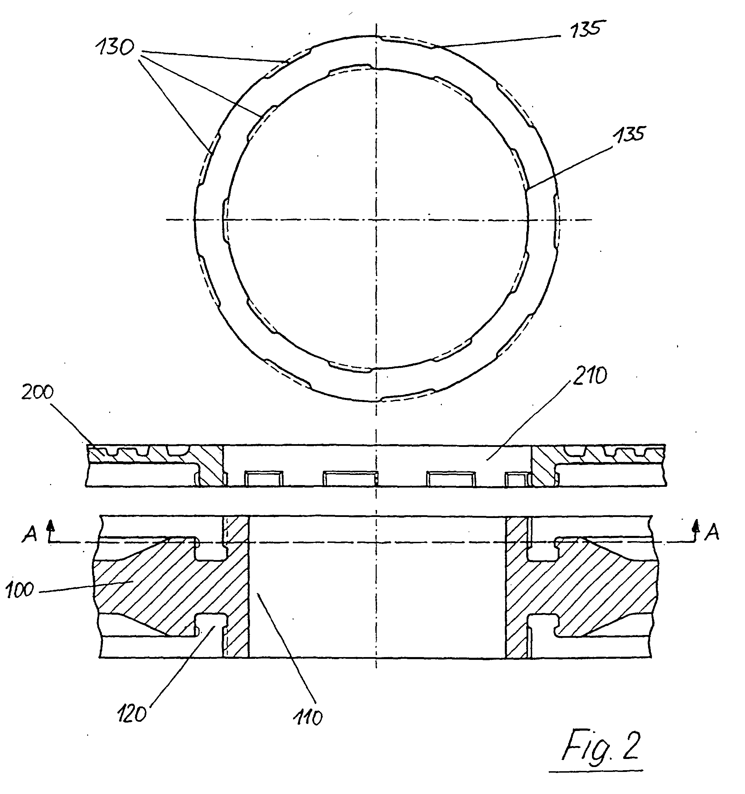

Figur 2 zeigt eine zur Figur 1 identische Darstellung einer zweiten Ausführungsform der erfindungsgemäßen Membranfilterplatte. Die Ausführungsformen stimmen weitgehend überein, so daß für gleiche oder ähnliche Elemente identische Bezugszeichen verwendet werden.

Der einzige Unterschied zu der in Figur 1 dargestellten Ausführungsform ist, daß sich die Verriegelungs-Vorsprünge 130, 230 auf beiden Seiten der Führungs-Nut 120 bzw. der Führungs-Vorrichtung 220 nicht gegenüberstehen, sondern alternierend angeordnet sind. Dies führt zu einer gleichmäßigeren Verteilung der Verriegelungskräfte über den Umfang des Einlaufbereichs der dargestellten Membranfilterplatte.

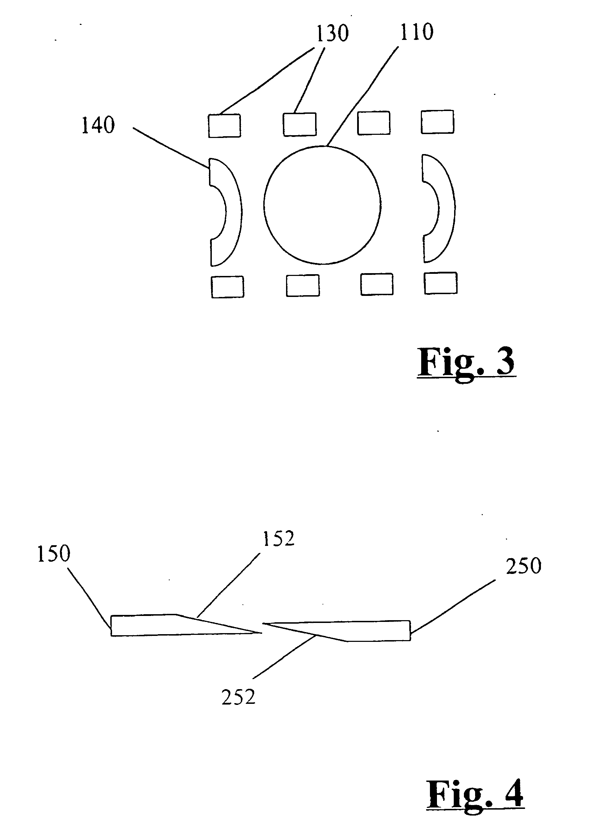

Figur 3 zeigt schematisch eine Anordnung von Befestigungsvorrichtungen um einen Einlaufbereich bei einer dritten Ausführungsform der erfindungsgemäßen Membranfilterplatte. Dargestellt sind lediglich die Verriegelungs-Vorsprünge 130 der Trägerplatte 100, die um den Einlaufbereich 110 angeordnet sind. Die Verriegelungs-Vorsprünge 230 der Membran 200 sind analog angeordnet.

Bei dieser Auführungsform sind zwei lineare Anordnungen von Verriegelungs-Vorsprüngen 130 auf zwei Seiten des Einlaufbereichs vorgesehen, während auf den offenen Seiten zusätzliche kreissegmentförmige Verriegelungs-Vorsprünge 140 vorgesehen. Die Membran wird von ihrer Ansetzposition linear in die Verriegelungsposition verschoben, in der Figur 3 von links nach rechts, wobei die Verriegelungs-Vorsprünge der Membran die Verriegelungs-Vorsprünge 130, 140 der Trägerplatte 100 hinterschneiden. Bei dieser Ausführungsform sind keine zusätzlichen Anschläge an den Verriegelungs-Vorsprüngen notwendig, da die Verriegelungsposition aufgrund der kreissegmentförmigen Verriegelungs-Vorsprünge 140, die auch als Anschläge dienen, nicht durchlaufen werden kann. Die schematische Darstellung der Verriegelungs-Vorsprünge der Membran sieht identisch aus, so daß auf eine zusätzliche Darstellung verzichtet wurde.

Figur 4 zeigt schematisch einen Verriegelungs-Vorsprung 150 der Trägerplatte 100 und einen Verriegelungs-Vorsprung 250 der Membran, die mit Anlaufflächen 152, 252 versehen sind. Diese Anlaufflächen 152,.252 vereinfachen ein Einsetzen der Membran in die Trägerplatte, wobei beim Verdrehen bzw. Verschieben der Membran in die Verriegelungs-Position auf die Trägerplatte 100 und die Membran 200 eine relative Kraft ausgeübt wird, die die Trägerplatte 100 und die Membran 200 aufeinander zu zwingt, so daß eine sichere und dichte Befestigung gewährleistet wird. Es soll nochmals darauf hingewiesen, daß die Figuren 3 und 4 lediglich schematische Darstellung sind, denen insbesondere keine Größenordnungen entnommen werden können. Auch die geometrischen Ausgestaltungen und Formen bzw. Konturen sind nur schematisch dargestellt.

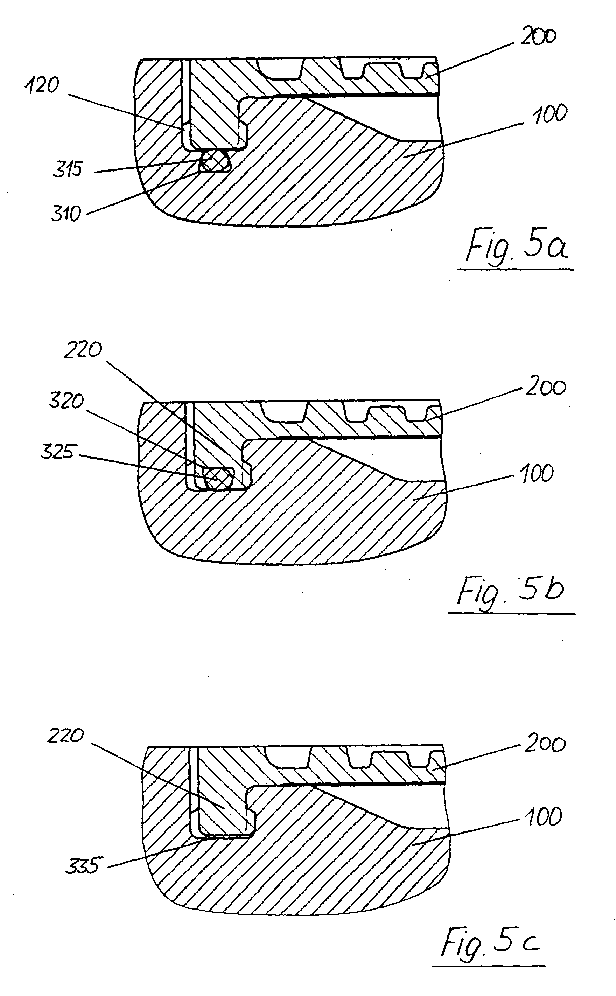

Die Figuren 5a, 5b, 5c zeigen Dichtungs-Elemente, die insbesondere bei den in den Figuren 1 und 2 dargestellten Ausführungsformen, aber auch bei anderen Ausführungsformen der erfindungsgemäßen Membranfilterplatte eingesetzt werden können.

In Figur 5a ist eine Trägerplatte 100 mit einer Führungs-Nut 120 gezeigt, in deren Boden eine Dichtungsnut 310 ausgeformt ist. In der Dichtungsnut 310 ist eine O-Ring-Dichtung 315 aus Gummi eingesetzt, die in ihrem entspannten Zustand leicht über den Boden der Führungs-Nut 120 der Trägerplatte 100 hinausragt, so daß durch das Anpressen des Führungs-Vorsprungs 220 der Membran 200 eine dichtende Verbindung hergestellt wird.

Figur 5b zeigt eine Ausführungsform der erfindungsgemäßen Membranfilterplatte, bei der in den Führungsvorsprung 220 der Membran 200 eine Dichtungs-Nut 320 eingearbeitet ist, in die, ähnlich zu der in Figur 5a gezeigten Ausführungsform, eine O-Ring-Dichtung 325 eingesetzt ist.

Figur 5c schließlich zeigt eine Flach-Dichtung 335, die in einen Spalt zwischen dem Boden der Führungs-Nut 120 der Trägerplatte 100 und dem Führungs-Vorsprung 220 der Membran 200 angeordnet ist. Die Flach-Dichtung 335 ist in dieser Ausführungsform eine Gummidichtung, die einstückig mit der Führungsnut 120 der Trägerplatte 100 ausgebildet ist, indem sie an die Führungs-Nut 120 angegossen worden ist.

Es wird darauf hingewiesen, daß insbesondere weitere Anordnungen der Befestigungselemente und geometrische Ausgestaltungen der Befestigungselemente sowie der Abdichtungen für den Fachmann möglich sind, ohne vom Gegenstand der Erfindung abzuweichen.

## Patentansprüche

1. Mernbranfilterplatte für eine Filterpresse mit
- einer Trägerplatte (100) und
- mindestens einer Membran (200), die lösbar an der Trägerplatte (100) befestigbar ist,
- wobei die Trägerplatte (100) und die Membran (200) einen Einlauf- und/oder Auslaufbereich aufweisen, und
- die Membranfilterplatte im wesentlichen um den Einlauf- und/oder Auslaufbereich der Trägerplatte (100) und/oder der Membran (200) herum Befestigungs-Elemente aufweist,
**dadurch gekennzeichnet, daß**
die Trägerplatte (100) Befestigungs-Elemente (130) und die Membran (200) Befestigungs-Elemente (230) aufweisen, die jeweils fest mit der Trägerplatte (100) bzw. der Membran (200) verbunden und so angeordnet und ausgebildet sind, daß die Befestigungs-Elemente (130) der Trägerplatte (100) mit den Befestigungs-Elementen (230) der Membran (200) nicht wechselwirken, wenn sich die Membran in einer Ansetzposition befindet, und die Befestigungs-Elemente (130) der Trägerplatte (100) mit den Befestigungs-Elementen (230) der Membran (200) so wechselwirken, daß die Membran (200) im Einlauf- und/oder Auslaufbe-reich mittels dieser wechselwirkende Befestigungselemente (130, 230) fest mit der Trägerplatte (200) verbunden ist, wenn sich die Membran (200) in einer Verriegelungsposition befindet.

2. Membranfilterplatte nach Anspruch 1, **dadurch gekennzeichnet, daß** es sich bei den Befestigungs-Elementen um jeweils mit Abstand voneinander angeordnete Verriegelungs-Vorsprünge (130, 230) handelt, wobei die Verriegelungs-Vorsprünge (130, 230) an der Trägerplatte (100) und der Membran (200) jeweils so angeordnet sind, daß die Verriegelungs-Vorsprünge (230) der Membran (200) beim Ansetzen der Membran (200) auf die Trägerplatte (100) an den Verriegelungs-Vorsprüngen (130) der Trägerplatte (100) vorbeilaufen, wenn sich die Membran in der Ansetzposition befindet, und daß die Verriegelungs-Vorsprünge (230) der Membran (200) die Verriegelungs-Vorsprünge (130) der Trägerplatte (100) zumindest teilweise hinterschneiden, wenn sich die Membran (200) in der Verriegelungsposition befindet.

3. Membranfilterplatte nach Anspruch 1 oder 2, **dadurch gekennzeichnet, daß** die Membran (200) mittels einer Drehbewegung um einen festgelegten Winkel zwischen der Ansetzposition und der Verriegelungsposition hin- und herschaltbar ist.

4. Membranfilterplatte nach Anspruch 3, **dadurch gekennzeichnet, daß** die Befestigungselemente (130, 230) der Trägerplatte (100) und der Membran (200) jeweils im wesentlichen auf wenigstens einer Kreisbahn angeordnet sind.

5. Membranfilterplatte nach Anspruch 1 oder 2, **dadurch gekennzeichnet, daß** die Membran (200) mittels einer geradlinigen Bewegung um wenigstens einen festgelegten Abstand zwischen der Ansetzposition und der Verriegelungspositon hin- und herschaltbar ist.

6. Membranfilterplatte nach Anspruch 5, **dadurch gekennzeichnet, daß** die Befestigungs-Elemente (130, 230) der Trägerplatte (100) und der Membran (200) jeweils zumindest teilweise in mindestens zwei linearen Anordnungen positioniert sind.

7. Membranfilterplatte nach einem der Ansprüche 2 bis 4, **dadurch gekennzeichnet, daß** sowohl die an der Membran (200) als auch die an der Trägerplatte (100) angeordneten Verriegelungs-Vorsprünge (130, 230) in jeweils zwei konzentrischen Kreisanordnungen positioniert sind.

8. Membranfilterplatte nach Anspruch 7, **dadurch gekennzeichnet, daß** sich die Verriegelungs-Vorsprünge (130, 230) auf den konzentrischen Kreisanordnungen jeweils gegenüberstehen.

9. Membranfilterplatte nach Anspruch 7, **dadurch gekennzeichnet, daß** ein Verriegelungsvorsprung (130, 230) auf einer der Kreisanordnungen jeweils einer Lücke zwischen zwei Verriegelungs-Vorsprüngen (130, 230) auf der anderen Kreisanordnung gegenübersteht.

10. Membranfilterplatte nach einem der Ansprüche 2 bis 9, **dadurch gekennzeichnet, daß** die Membran (200) einen Führungs-Vorsprung (220) aufweist, der sich im wesentlichen senkrecht zur Ebene der Membran (200) in Richtung auf die Trägerplatte (100) erstreckt, wobei der Führungs-Vorsprung (220) in eine Führungs-Nut (120) der Trägerplatte einsetzbar ist.

11. Membranfilterplatte nach einem der Ansprüche 2 bis 9, **dadurch gekennzeichnet, daß** die-Trägerplatte (100) einen Führungs-Vorsprung aufweist, der sich im wesentlichen senkrecht zur Ebene der Trägerplatte (100) in Richtung auf die Trägerplatte (100) erstreckt, wobei der Führungs-Vorsprung in eine Führungs-Nut der Membran einsetzbar ist.

12. Membranfilterplatte nach einem der Ansprüche 10 oder 11, **dadurch gekennzeichnet, daß** sich von der Führungs-Nut (120) und dem Führungs-Vorsprung (220) Verriegelungs-Vorsprünge (130, 230) ein- oder beidseitig erstrecken.

13. Membranfilterplatte nach einem der Ansprüche 1 bis 12, **dadurch gekennzeichnet, daß** die Membran (200) und/oder die Trägerplatte (100) im Bereich der Befestigungselemente (130, 230) mit mindestens einer Dichtung (315, 325, 335) versehen ist.

14. Membranfilterplatte nach Anspruch 13, **dadurch gekennzeichnet, daß** die Dichtung (315) in einer Dichtungs-Nut (310) in der Führungs-Nut (120) der Trägerplatte (100) oder der Membran (200) angeordnet ist.

15. Membranfilterplatte nach Anspruch 13, **dadurch gekennzeichnet, daß** die Dichtung (325) in einer Dichtungs-Nut (320) in dem Führungs-Vorsprung (220) der Membran (200) oder der Trägerplatte (100) angeordnet ist.

16. Membranfilterplatte nach Anspruch 13, **dadurch gekennzeichnet, daß** eine Flach-Dichtung (335) in einem Spalt zwischen Elementen der Membran (200) und der Trägerplatte (100) angeordnet ist.

17. Membranfilterplatte nach einem der Ansprüch 13 bis 16, **dadurch gekennzeichnet, daß** die Dichtung einstückig mit der Trägerplatte (100) oder der Membran (200) ausgebildet ist

18. Membranfilterplatte nach einem der vorangehenden Ansprüche, **dadurch gekennzeichnet, daß** die Membran (200) und die zugehörigen Befestigungs-Elemente (230) aus demselben Material hergestellte sind.

19. Membranfilterplatte nach einem der vorangehenden Ansprüche, **dadurch gekennzeichnet, daß** die Trägerplatte (100) und die zugehörigen Befestigungs-Elemente (130) aus dem selben Material hergestellt sind.

20. Membranfilterplatte nach einem der vorangehenden Ansprüche, **dadurch gekennzeichnet, daß** die Membran (200) und/oder die Trägerplatte (100) und/oder die Befestigungs-Elemente (130, 230) aus einem Kunststoff, insbesondere aus Polypropylen (PP), hergestellt sind.

21. Trägerplatte für eine Membranfilterplatte für eine Filterpresse, an die mindestens eine Membran lösbar befestigbar ist, wobei die Trägerplatte einen Einlauf- und/oder Auslaufbereich aufweist und im wesentlichen um den Einlauf- und/oder Auslaufbereich Befestigungselemente vorgesehen sind,
**dadurch gekennzeichnet, daß**
die Trägerplatte (100) Befestigungs-Elemente (130) aufweist, die fest mit der Trägerplatte verbunden sind und so angeordnet und ausbildet sind, daß die Befestigungselemente (130) der Trägerplatte (100) nicht mit Befestigungselementen (230) einer Membran (200) wechselwirken, wenn sich die Membran (200) in einer Ansetzposition befindet, und die Befestigungs-Elemente (130) der Trägerplatte (100) mit den Befestigungs-Elementen (230) der Membran (200) so wechselwirken, daß die Membran (200) im Einlauf- und/oder Auslaufbereich mittels dieser wechselwirkende Befestigungselemente (130, 230) fest mit der Trägerplatte (200) verbunden ist, wenn sich die Membran (200) in einer Verriegelungsposition befindet.

22. Membran für eine Membranfilterplatte für eine Filterpresse, die lösbar an einer Trägerplatte befestigbar ist, wobei die Membran einen Einlauf- und/oder Auslaufbereich aufweist und im wesentlichen um den Einlauf- und/oder Auslaufbereich Befestigungselemente vorgesehen sind,
**dadurch gekennzeichnet, daß**
die Membran (200) Befestigungs-Elemente (230) aufweist, die fest mit der Membran verbunden sind und so angeordnet und ausbildet sind, daß die Befestigungselemente (130) der Membran (200) nicht mit Befestigungselementen (130) einer Trägerplatte (100) wechselwirken, wenn sich die Membran (200) in einer Ansetzposition befindet, und die Befestigungs-Elemente (230) der Membran (200) mit den Befestigungs-Elementen (130) der Trägerplatte (100) so wechselwirken, daß die Membran (200) im Einlauf- und/oder Auslaufbereich mittels dieser wechselwirkende Befestigungselemente (130, 230) fest mit der Trägerplatte (200) verbunden ist, wenn sich die Membran (200) in einer Verriegelungsposition befindet.

## Claims

1. Membrane filter plate for a filter press, having
- a carrier plate (100) and
- at least one membrane (200) which can be fastened releasably on the carrier plate (100),
- the carrier plate (100) and the membrane (200) having an inlet and/or outlet region, and
- the membrane filter plate having fastening elements essentially around the inlet and/or outlet region of the carrier plate (100) and/or of the membrane (200),
**characterized in that**
the carrier plate (100) has fastening elements (130) and the membrane (200) has fastening elements (230), the fastening elements respectively being fixed to the carrier plate (100) and the membrane (200) in each case and being arranged and designed such that the fastening elements (130) of the carrier plate (100) do not interact with the fastening elements (230) of the membrane (200) when the membrane is located in a fit-on position, and the fastening elements (130) of the carrier plate (100) interact with the fastening elements (230) of the membrane (200) such that the membrane (200) is fixed to the carrier plate (100) in the inlet and/or outlet region by means of said interacting fastening elements (130, 230) when the membrane (200) is located in a locking position.

2. Membrane filter plate according to Claim 1, **characterized in that** the fastening elements are respectively spaced-apart locking protrusions (130, 230), the locking protrusions (130, 230) being arranged on the carrier plate (100) and the membrane (200) in each case such that, when the membrane (200) is fitted onto the carrier plate (100), the locking protrusions (230) of the membrane (200) run past the locking protrusions (130) of the carrier plate (100), if the membrane is located in the fit-on position, and that the locking protrusions (230) of the membrane (200) at least partially undercut the locking protrusions (130) of the carrier plate (100) when the membrane (200) is located in the locking position.

3. Membrane filter plate according to Claim 1 or 2, **characterized in that** the membrane (200) can be moved back and forth between the fit-on position and the locking position by means of a rotary movement through a defined angle.

4. Membrane filter plate according to Claim 3, **characterized in that** the fastening elements (130, 230) of the carrier plate (100) and of the membrane (200) are arranged in each case essentially on at least one circular path.

5. Membrane filter plate according to Claim 1 or 2, **characterized in that** the membrane (200) can be moved back and forth between the fit-on position and the locking position by means of a rectilinear movement by at least one defined distance.

6. Membrane filter plate according to Claim 5, **characterized in that** the fastening elements (130, 230) of the carrier plate (100) and of the membrane (200) are each positioned at least partially in at least two linear arrangements.

7. Membrane filter plate according to one of Claims 2 to 4, **characterized in that** the locking protrusions (130, 230) arranged both on the membrane (200) and the carrier plate (100) are positioned in two concentric circular arrangements in each case.

8. Membrane filter plate according to Claim 7, **characterized in that** the locking protrusions (130, 230) on the concentric circular arrangements are located opposite one another in each case.

9. Membrane filter plate according to Claim 7, **characterized in that** a locking protrusion (130, 230) on one of the circular arrangements is located opposite a gap in each case between two locking protrusions (130, 230) on the other circular arrangement.

10. Membrane filter plate according to one of Claims 2 to 9, **characterized in that** the membrane (200) has a guide protrusion (220) which extends essentially perpendicularly to the plane of the membrane (200), in the direction to the carrier plate (100), whereby said guide protrusion (220) is insertable into a guide groove (120) of the carrier plate.

11. Membrane filter plate according to one of Claims 2 to 9, **characterized in that** the carrier plate (100) has a guide protrusion which extends essentially perpendicularly to the plane of the carrier plate (100), in the direction to the membran (100), whereby said guide protrusion is insertable into a guide groove of the membrane.

12. Membrane filter plate according to either of Claims 10 and 11, **characterized in that** locking protrusions (130, 230) extend from the guide groove (120) and the guide protrusion (220) on one or both sides.

13. Membrane filter plate according to one of Claims 1 to 12, **characterized in that** the membrane (200) and/or the carrier plate (100) are/is provided with at least one seal (315, 325, 335) in the region of the fastening elements (130, 230).

14. Membrane filter plate according to Claim 13, **characterized in that** the seal (315) is arranged in a sealing groove (310) in the guide groove (120) of the carrier plate (100) or of the membrane (200).

15. Membrane filter plate according to Claim 13, **characterized in that** the seal (325) is arranged in a sealing groove (320) in the guide protrusion (220) of the membrane (200) or of the carrier plate (100).

16. Membrane filter plate according to Claim 13, **characterized in that** a flat seal (335) is arranged in a gap between elements of the membrane (200) and of the carrier plate (100).

17. Membrane filter plate according to one of Claims 13 to 16, **characterized in that** the seal is formed integrally with the carrier plate (100) or the membrane (200).

18. Membrane filter plate according to one of the preceding claims, **characterized in that** the membrane (200) and the associated fastening elements (230) are produced from the same material.

19. Membrane filter plate according to one of the preceding claims, **characterized in that** the carrier plate (100) and the associated fastening elements (130) are produced from the same material.

20. Membrane filter plate according to one of the preceding claims, **characterized in that** the membrane (200) and/or the carrier plate (100) and/or the fastening elements (130, 230) are produced from a plastic, in particular from polypropylene (PP).

21. Carrier plate for a membrane filter plate for a filter press, whereby at least one membrane can be releasably fastened on said carrier plate, the carrier plate having an inlet and/or outlet region, and fastening elements being provided essentially around the inlet and/or outlet region,
**characterized in that**
the carrier plate (100) has fastening elements (130), which are fixed to the carrier plate and are arranged and designed such that the fastening elements (130) of the carrier plate (100) do not interact with fastening elements (230) of a membrane (200) when the membrane (200) is located in a fit-on position, and the fastening elements (130) of the carrier plate (100) interact with the fastening elements (230) of the membrane (200) such that the membrane (200) is fixed to the carrier plate (100) in the inlet and/or outlet region by means of said interacting fastening elements (130, 230) when the membrane (200) is located in a locking position.

22. Membrane for a membrane filter plate for a filter press, whereby said membrane can be releasably fastened on a carrier plate, the membrane having an inlet and/or outlet region, and fastening elements being provided essentially around the inlet and/or outlet region,
**characterized in that**
the membrane (200) has fastening elements (230), which are fixed to the membrane and are arranged and designed such that the fastening elements (230) of the membrane (200) do not interact with fastening elements (130) of a carrier plate (100) when the membrane (200) is located in a fit-on position, and the fastening elements (230) of the membrane (200) interact with the fastening elements (130) of the carrier plate (100) such that the membrane (200) is fixed to the carrier plate (100) in the inlet and/or outlet region by means of said interacting fastening elements (130, 230) when the membrane (200) is located in a locking position.

## Revendications

1. Plaque filtrante à membrane pour un filtre-presse, comportant
- une plaque support (100), et
- au moins une membrane (102), susceptible d'être fixée de façon désolidarisable sur la plaque support (100)
- où la plaque support (100) et la membrane (200) présentent une zone d'admission et/ou d'évacuation, et
- la plaque filtrante à membrane présente des éléments de fixation placés essentiellement autour de la zone d'admission et/ou d'évacuation de la plaque support (100) et/ou de la membrane (200),
**caractérisée en ce que**
la plaque support (100) présente des éléments de fixation (130) et la membrane (200) présente des éléments de fixation (200), qui sont chacun reliés rigidement à la plaque support (100), respectivement à la membrane (200), et sont disposés et configurés de manière que les éléments de fixation (130) de la plaque support (100) n'interagissent pas avec des éléments de fixation (230) de la membrane (200), lorsque la membrane se trouve en une position de plaquage, et les éléments de fixation (130) de la plaque support (100) interagissent avec les éléments de fixation (230) de la membrane (200), de manière que la membrane (200) soit reliée rigidement à la plaque support (100) au moyen de ces éléments de fixation (130, 230) en interaction, dans la zone d'admission et/ou d'évacuation, lorsque la membrane (200) se trouve en une position de verrouillage.

2. Plaque filtrante à membrane selon la revendication 1, **caractérisée en ce que**, concernant les éléments de fixation, il s'agit pour chacun de saillies de verrouillage (130, 230) disposées à distance les unes des autres, les saillies de verrouillage (130, 230) étant chacune disposées sur la plaque support, d'une part, et sur la membrane (200), d'autre part, de manière que les saillies de verrouillage (230) de la membrane (200), lorsque la membrane (200) est plaquée sur la plaque support (100), passent sur les saillies de verrouillage (130) de la plaque support (100), lorsque la membrane se trouve en position de plaquage, et que les saillies de verrouillage (230) de la membrane (200) coupent par l'arrière au moins partiellement les saillies de verrouillage (130) de la plaque support (100), lorsque la membrane (200) se trouve en position de verrouillage.

3. Plaque filtrante à membrane selon la revendication 1 ou 2, **caractérisée en ce que** la membrane (200) est susceptible d'être commutée dans un sens et dans l'autre, à l'aide d'un mouvement rotatif de la valeur d'un angle fixé, entre la position de plaquage et la position de verrouillage.

4. Plaque filtrante à membrane selon la revendication 3, **caractérisée en ce que** les éléments de fixation (130, 230) de la plaque support (100) et de la membrane (200) sont chacun disposés essentiellement sur au moins une trajectoire circulaire.

5. Plaque filtrante à membrane selon la revendication 1 ou 2, **caractérisée en ce que** la membrane (200) est susceptible d'être commutée dans un sens et dans l'autre au moyen d'un mouvement rectiligne, effectué de la valeur d'au moins un espacement fixé, entre la position de plaquage et la position de verrouillage.

6. Plaque filtrante à membrane selon la revendication 5, **caractérisée en ce que** les éléments de fixation (130, 230) de la plaque support (100) et de la membrane (200) sont chacun disposés au moins partiellement en deux agencements linéaires.

7. Plaque filtrante à membrane selon l'une des revendications 2 à 4, **caractérisée en ce que**, tant les saillies de verrouillage (130, 230) disposées sur la membrane (200), qu'également celles situées sur la plaque support (100), sont positionnées chaque fois en deux agencements circulaires concentriques.

8. Plaque filtrante à membrane selon la revendication 7, **caractérisée en ce que** les saillies de verrouillage (130, 230) placées sur les agencements circulaires concentriques se font chaque fois face.

9. Plaque filtrante à membrane selon la revendication 7, **caractérisée en ce qu'**une saillie de verrouillage (130, 230), située sur l'un des agencements circulaires, est disposée chaque fois en face d'un vide se trouvant entre deux saillies de verrouillage (130, 230) situées sur l'autre agencement circulaire.

10. Plaque filtrante à membrane selon l'une des revendications 2 à 9, **caractérisée en ce que** la membrane (200) présente une saillie de guidage (220) s'étendant sensiblement perpendiculairement par rapport au plan de la membrane (200) dans la direction de la plaque support (100), la saillie de verrouillage (220) étant susceptible d'être insérée dans une rainure de guidage (120) de la plaque support.

11. Plaque filtrante à membrane selon l'une des revendications 2 à 9, **caractérisée en ce que** la plaque support (100) présente une saillie de guidage s'étendant sensiblement perpendiculairement par rapport au plan de la plaque support (100) dans la direction de cette plaque support (100), la saillie de guidage étant susceptible d'être insérée dans une rainure de guidage de la membrane.

12. Plaque filtrante à membrane selon l'une des revendications 10 ou 11, **caractérisée en ce que** des saillies de verrouillage (130, 230) s'étendent sur un côté ou sur les deux côtés de la rainure de guidage (120) et de la saillie de guidage (220).

13. Plaque filtrante à membrane selon l'une des revendications 1 à 12, **caractérisée en ce que** la membrane (200) et/ou la plaque support (100) sont munies d'au moins d'un joint d'étanchéité (315, 325, 335) dans la zone des éléments de fixation (130, 230).

14. Plaque filtrante à membrane selon la revendication 3, **caractérisée en ce que** le joint d'étanchéité (315) est disposé dans une gorge pour joint d'étanchéité (210), ménagée dans la gorge de guidage (120) de la plaque support (100) ou de la membrane (200).

15. Plaque filtrante à membrane selon la revendication 13, **caractérisée en ce que** le joint d'étanchéité (325) est disposé dans une gorge pour joint d'étanchéité (320) ménagée dans la saillie de guidage (220) de la membrane (200) ou de la plaque support (100).

16. Plaque filtrante à membrane selon la revendication 13, **caractérisée en ce qu'**un joint d'étanchéité plat (335) est disposé dans un interstice se trouvant entre des éléments de la membrane (200) et de la plaque support (100).

17. Plaque filtrante à membrane selon l'une des revendications 13 à 16, **caractérisée en ce que** le joint d'étanchéité est réalisé d'une seule pièce avec la plaque support (100) ou la membrane (200).

18. Plaque filtrante à membrane selon l'une des revendications précédentes, **caractérisée en ce que** la membrane (200) et les éléments de fixation (230) afférents sont fabriqués à partir du même matériau.

19. Plaque filtrante à membrane selon l'une des revendications précédentes, **caractérisée en ce que** la plaque support (100) et les éléments de fixation (130) afférents sont fabriqués à partir du même matériau.

20. Plaque filtrante à membrane selon l'une des revendications précédentes, **caractérisée en ce que** la membrane (200) et/ou la plaque support (100) et/ou les éléments de fixation (130, 220) sont fabriqués en une matière synthétique, en particulier en polypropylène (PP).

21. Plaque support pour une plaque filtrante à membrane pour un filtre-presse, à laquelle la au moins une membrane est susceptible d'être fixée de façon désolidarisable, la plaque support présentant une zone d'admission et/ou une zone d'évacuation, et des éléments de fixation étant prévus essentiellement autour de la zone d'admission et/ou d'évacuation,
**caractérisée en ce que**
la plaque support (100) présente des éléments de fixation (130), reliés rigidement à la plaque support et disposés et configurés de manière que les éléments de fixation (130) de la plaque support (100) n'interagissent pas avec les éléments de fixation (230) d'une membrane (200), lorsque la membrane (200) se trouve en une position de plaquage, et que les éléments de fixation (130) de la plaque support (100) interagissent avec les éléments de fixation (230) de la membrane (200), de manière que la membrane (200) soit reliée rigidement à la plaque support (100) au moyen de ces éléments de fixation (130, 230) en interaction, dans la zone d'admission et/ou d'évacuation, lorsque la membrane (200) se trouve en une position de verrouillage.

22. Membrane pour une plaque filtrante à membrane pour un filtre-presse, susceptible d'être fixée de façon désolidarisable sur une plaque support, la membrane présentant une zone d'admission et/ou d'évacuation, et des éléments de fixation étant prévus essentiellement autour de la zone d'admission et/ou d'évacuation,
**caractérisée en ce que**
la membrane (200) présente des éléments de fixation (230) reliés rigidement à la membrane et disposés et configurés de manière que les éléments de fixation (130) de la membrane (200) n'interagissent pas avec des éléments de fixation (130) d'une plaque support (100), lorsque la membrane (100) se trouve en position de plaquage, et les éléments de fixation (230) de la membrane (200) interagissent avec les éléments de fixation (130) de la plaque support (100), de manière que la membrane (200) soit reliée rigidement à la plaque support (100) à l'aide de ces éléments de fixation (130, 230) en interaction, dans la zone d'admission et/ou d'évacuation, lorsque la membrane (200) se trouve en une position de verrouillage.
